Europäisches Patentamt

European Patent Office

Office européen des brevets

(19)

(11) Veröffentlichungsnummer: **0 246 354 B1**

(12) **EUROPÄISCHE PATENTSCHRIFT**

(45) Veröffentlichungstag der Patentschrift: **02.12.92**

(21) Anmeldenummer: **86112313.1**

(22) Anmeldetag: **05.09.86**

(51) Int. Cl.5: **G01S 17/06**, G01S 17/87, F41G 3/26

(54) **Optoelektronische Einrichtung.**

(30) Priorität: **20.05.86 DE 3616929**

(43) Veröffentlichungstag der Anmeldung: **25.11.87 Patentblatt 87/48**

(45) Bekanntmachung des Hinweises auf die Patenterteilung: **02.12.92 Patentblatt 92/49**

(84) Benannte Vertragsstaaten: **AT BE CH DE FR GB IT LI LU NL SE**

(56) Entgegenhaltungen:
DE-A- 2 426 844        DE-A- 2 650 138
GB-A- 1 088 337        US-A- 3 848 999
US-A- 3 996 674        US-A- 4 290 757

(73) Patentinhaber: **PRECITRONIC Gesellschaft für Feinmechanik und Electronic m.b.H Schützenstrasse 75-85 W-2000 Hamburg 50(DE)**

(72) Erfinder: **Die Erfinder haben auf ihre Nennung verzichtet**

(74) Vertreter: **Glawe, Delfs, Moll & Partner Patentanwälte Postfach 26 01 62 Liebherrstrasse 20 W-8000 München 26(DE)**

EP 0 246 354 B1

## Beschreibung

Die Erfindung betrifft eine optoelektronische Einrichtung mit einem ersten Projektor, der Licht in Form eines Strahlenbündels mit einem ersten Raumöffnungswinkel ausstrahlt, mit einem oder mehreren Retroreflektoren an einem vom Projektor entfernten Ort und mit Einrichtungen zum Detektieren des zum Projektor zurückreflektierten Lichts und zum Bestimmen der Richtung des Orts.

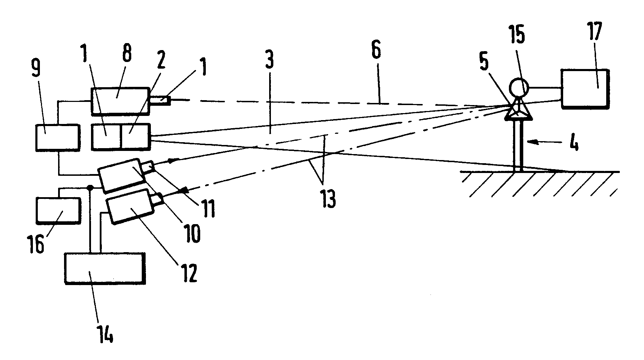

Es ist bekannt, Laserstrahlungen für Schußsimulation zu verwenden. Bei einer vorbekannten Vorrichtung (US-A-3 996 675) wird auf eine Leinwand die Abbildung einer Landschaft mit Zielen projiziert. Mit einer Waffe wird dann ein Infrarotlaserstrahl vom Schützen auf die Ziele gerichtet. Das Infrarotlicht wird durch eine Fernsehkamera in ein sichtbares Bild umgewandelt, das dann mit einem Fernprojektor auf die Leinwand zurückprojiziert wird, so daß der Schütze den Treffort erkennen kann. Obwohl Schießübungen mit dieser Vorrichtung möglich sind, ist eine Ortsbestimmung des Ziels nicht möglich, was unter anderem daran liegt, daß das Ziel real gar nicht existiert, sondern lediglich als Bild erscheint.

Eine weitere vorbekannte Vorrichtung (US-A-4 290 757) arbeitet ebenfalls mit Filmbildern. Auch hier wird der vom Schützen mit Hilfe des Lasers erzeugte Lichtfleck auf der Leinwand detektiert; es erfolgt zusätzlich aber noch mit Hilfe eines Rechners eine Auswertung der simulierten Schüsse. Eine exakte Ortsvermessung, wie sie bei Übungen im Gelände erforderlich ist, ist aber wieder nicht möglich, wobei dies auch daran liegt, daß die Ziele gar nicht real, sondern lediglich Filmbilder sind.

Es ist weiter bekannt, ein natürliches Szenario mit Laserpulsen zu belichten und dann aus der Laufzeit der zurückkommenden Signale die Entfernung der Objekte zu bestimmen und selektiv nur solche Objekte abzubilden, die sich innerhalb eines vorgegebenen Entfernungsbereiches befinden (US-PS 3 848 999). Hier handelt es sich um eine normale Beleuchtung, wobei das gesamte beleuchtete Objekt bzw. auch die Umgebung Licht zurückstreuen oder reflektieren. Man hat daher im zurückkommenden Licht keine scharfen gut definierten Lichtquellen, die eine genaue Ortsbestimmung dieser Lichtquellen ermöglichen würden.

Bei einer weiteren vorbekannten Vorrichtung wird ein Laserstrahl auf ein Ziel gerichtet, das verfolgt werden soll (GB-A-1 088 337). Es besteht hier das Problem, den verhältmäßig enggebündelten Laserstrahl anfänglich exakt auf das Ziel zu richten, damit dieses dann automatisch weiterverfolgt werden kann.

Auch bei einer Einrichtung der eingangs genannten Art, die z.B. zur Vermessung mit Laserstrahlen oder der Gefechtssimulation dient (DE-A-30 28 545) besteht das Problem, den scharf gebündelten Laserstrahl auf das Ziel zu richten, da sonst vom Retroreflektor kein Licht zurückreflektiert wird. Ein Nachteil dieser scharfen Bündelung besteht also darin, daß man den Laserstrahl auf den oder die Reflektoren sehr genau richten muß, damit reflektiertes Licht zurück in Richtung des Projektors gestrahlt und dort detektiert werden kann.

Zu diesem Zweck ist es möglich, den Laserstrahl zu "scannen", also eine Abtastbewegung durchzuführen. Gleichzeitig oder statt dessen kann man den scharf gebündelten Laserstrahl oder einen Teil des Laserstrahles keulenförmig aufweiten.

Im ersteren Falle besteht der Nachteil, daß man verhältnismäßig lange eine Abtastbewegung durchführen muß, bis man ein reflektiertes Signal findet. Dies gilt insbesondere, da die Abtastbewegung nur mit verhältnismäßig kleiner Laserleistung durchgeführt werden kann, da die von den Unfallverhütungsvorschriften vorgeschriebene maximale Laserleistung von $5 \times 10^{-7}$ W/cm$^2$ nicht überschritten werden darf. Bei so kleiner Laserleistung spricht aber ein Sensor für reflektiertes Licht nicht so schnell an, was die Abtastgeschwindigkeit begrenzt. Auch bei dem keulenförmig aufgeweiteten Laserstrahl treten die Probleme der maximal zulässigen Strahlungsleistung pro Flächeneinheit auf. Außerdem sind sehr große Laserleistungen erforderlich. Bei ca. 5° Öffnungswinkel einer Laserstrahlenkeule bei einer angenommenen Entfernung von 3 km werden am Ziel etwa 70 000 m$^2$ ausgeleuchtet. Nimmt man an, daß die Empfängerfläche 1 cm$^2$ beträgt und berücksichtigt man, daß bei großen Sehfeld der als Empfänger verwendeten Sensoren und hellem Hintergrund die Empfindlichkeit der Sensoren einige Mikrowatt beträgt, so erhält man eine erforderliche Sendeleistung des Lasers von mindestens 700 Watt (wenn man als Emfindlichkeit des Sensors 1 Mikrowatt annimmt). Diese Verhältnisse treten bei Impulsbetrieb bei üblicher Pulsbreite von ungefähr 20 bis 50 Nanosekunden auf, wobei die atmosphärischen Verluste von ca. 3 dB pro Kilometer noch nicht berücksichtigt sind.

Noch schwieriger werden die Verhältnisse, wenn die Sensoren nicht am Zielort aufgestellt sind, sondern am Zielort Retroreflektoren sind, die das Licht zum Projektor zurück reflektieren. Außerdem tritt natürlich das Problem auf, daß ein aufgeweiteter Laserstrahl für exakte Messungen des Ortes der Retroreflektoren wenig geeignet ist.

Die Aufgabe der Erfindung besteht in der Schaffung einer optoelektronischen Einrichtung, die die Vorteile einer Lasereinrichtung mit scharf gebündeltem Laserstrahl mit dem Vorteil verbindet, daß der Laserstrahl schnell auf einen oder mehrere Retroreflektoren ausgerichtet werden kann.

Die erfindungsgemäße Lösung besteht darin, daß der erste Projektor eine inkohoränte Lichtquelle aufweist, und daß ein zweiter Projektor, der Laserlicht beziehungsweise begrenzt monochromatisches Licht von Leuchtdioden in einem engeren Strahlenbündel als das des ersten Projektors ausstrahlt, und Einrichtungen zum Ausrichten des zweiten Projektors auf den die Retroreflektoren aufgrund der mit dem reflektierten Licht des ersten Projektors bestimmten Richtung vorgesehen sind.

Das Zielgebiet wird also zunächst nicht mit einem abtastenden Laserstrahl oder einer aufgeweiteten Laserlichtkeule beleuchtet, sondern mit dem Licht einer inkohärenten Lichtquelle. Dieses Licht kann ohne großen Aufwand wesentlich intensiver sein als das Licht eines Lasers. Außerdem bestehen weder Vorschriften für die maximale Stärke dieses Licht, noch ist dieses Licht so gefährlich wie Laserstrahlung, was mit der Inkohärenz sowie der Tatsache zusammenhängt, daß dieses inkohärente Licht nicht monochromatisch ist.

Zusätzlich weist die Einrichtung einen zweiten Projektor für Laserlicht beziehungsweise begrenzt monochromatisches Licht von Leuchtdioden mit einem engeren Strahlenbüdel als das des ersten Projektors auf. Dieser zweite Projektor wird dann auf den oder die Retroreflektoren gerichtet, wenn der Ort des Retroreflektors beziehungsweise der Retroreflektoren mit Hilfe des inkohärenten Lichtes durch Reflektion bestimmt worden ist.

Dieses Ausrichten kann selbstverständlich mit Hilfe entsprechender Einrichtungen automatisch erfolgen.

Nachdem der zweite Projektor auf den oder die Laserreflektoren ausgerichtet ist, kann man jetzt nach den Verfahren weiter arbeiten, die für solche Systeme von Laserlichtprojektor und Retroreflektor bekannt sind, zum Beispiel Entfernungsmeßsysteme, geographische Vermessung, Vermessung in Tunneln, Schächten usw.

Selbstverständlich braucht nicht nur der zweite Projektor auf die Retroreflektoren ausgerichtet zu werden; man könnte den zweiten Projektor einstückig mit dem ersten Projektor verbinden, wobei dann die Gesamtheit der beiden Projektoren ausgerichtet wird. Dies hätte auch den Vorteil, daß sich der Retroreflektor immer in der Mitte den Strahlenbündels des ersten Projektors befindet und sich im Falle eines bewegten Ziels nicht so leicht aus diesem Strahlenbündel heraus bewegen kann.

Vorteilhafterweise hat das vom ersten Projektor ausgestrahlte Licht einen Raumöffnungswinkel von 1 bis 5°.
Selbstverständlich sind auch andere Winkelbereiche je nach Anwendungsbereich denkbar.

Die inkohärente Lichtquelle des ersten Projektors kann eine Gasentladungslampe sein, die besonders intensives Licht liefert. Diese inkohärente Lichtquelle des ersten Projektors kann eine kontinuierliche Lichtquelle sein. Das hätte zum Beispiel den Vorteil, daß mit Hilfe des ersten Projektors der zweite Projektor kontinuierlich auf den Retroreflektor gerichtet bleiben kann.

Bei anderen Anwendungen kann es zweckmäßiger sein, statt kontinuierlicher Lichtquellen Blitzlichtquellen zu verwenden. Dies hat den Vorteil von Energieeinsparung und bei militärischen Anwendungen den weitere Vorteil, daß durch die Blitze gleichzeitig wirklichkeitsnah Geschützfeuer simuliert werden kann. Die Blitzlichtröhre kann dabei zum Abgeben von schnellen Blitzfolgen ausgebildet sein, damit so am Anfang der zweite Projektor genau auf die Retroreflektoren ausgerichtet werden kann und diese Ausrichtung nachher auch mit Hilfe dieser Blitzlichtpulse aufrechterhalten werden kann, falls man nicht vorzieht, die weitere Ausrichtung mit Hilfe des Lichts des zweiten Projektors aufrechtzuerhalten.

Die Gasentladungsröhren können dabei Xenon-Röhren, Krypton-Röhren, Quecksilberhochdruck-Röhren oder andere sein. Sowohl für solche Gasentladungsröhren als auch für andere kontinuierliche Lichtquellen können noch geeignete Filter für die ersten Projektoren verwendet werden.

Der Ort der Retroreflektoren könnte aufgrund des reflektierten Lichtes des ersten Projektors zum Beispiel mit einem Fernrohr festgesellt werden. Eine automatische Ausrichtung des zweiten Projektors kann aber auch durch automatisches Verarbeiten des reflektierten Bildes geschehen, zum Beispiel mit einem Foto-Quadrantendetektor oder einer positionsempfindlichen Fotodiodeneinrichtung. Als besonders vorteilhaft hat es sich aber erwiesen, wenn für diesen Zweck eine Fernsehkamera zum Aufnehmen des reflektierten inkohärenten Lichtes vorgesehen ist. Dabei wird diese Fernsehkamera vorteilhafterweise einen Bildwinkel haben, der ungefähr dem Raumöffnungswinkel des Lichtbündels des ersten Projektors entspricht. Das von der Fernsehkamera aufgenommene Bild kann dann automatisch durch entsprechende elektronische Einrichtungen ausgewertet werden, damit so der zweite Projektor auf den Retroreflektor gerichtet werden kann.

Man könnte als Fernsehkamera eine Kamera mit einer Videcon-Röhre verwenden. Als ganz besonders vorteilhaft hat sich aber für diesen Zweck eine Matrix-CCD-Kamera erwiesen.

Wie bereits erwähnt braucht am vom Ort der Projektoren entfernten Ort nur ein Retroreflektor, zum Beispiel ein Tripelspiegel angeordnet zu sein; die Auswertung auch des Lichtes des zweiten Projektors erfolgt dann ausschließlich am Ort der beiden Projektoren. Dies ist für Vermessungszwecke in vielen Fällen ausreichend. Andererseits kann man aber auch vorsehen, daß am Ort des/der Retroreflektoren mindestens ein Detektor für das Licht des zweiten Projektors vorgesehen ist, dessen Emp-

findlichkeitsbereich selbstverständlich auf das Laserlicht oder Leuchtdiodenlicht abgestimmt sein muß. Dieser Detektor kann unmittelbar neben dem Retroreflektor angeordnet sein, so daß man wegen der natürlichen Divergenz auch eines gutkollimierten Laserstrahls sicher sein kann, daß gleichzeitig Licht in den Retroreflektor und den Detektor gelangt. Haben Retroreflektor und Detektor aber einen gewissen Abstand voneinander, so kann dies beim Ausrichten des zweiten Projektors berücksichtigt werden.

Sind noch Einrichtungen zum Modulieren des Lichts des zweiten Projektors vorgesehen, so können zum Detektor Machrichten übertragen werden.

Die Einrichtung kann zusätzlich einen Laufzeitentfernungsmesser für das Licht des zweiten Projektors zur Bestimmung des Abstands zwischen diesem Projektor und dem/den Retroreflektoren aufweisen. Mit Hilfe eines solchen Laserentfernungsmessers können dann nicht nur die Winkelkoordinaten der Retroreflektoren bestimmt werden, sondern auch ihre Entfernung von den Projektoren.

Mit Hilfe der Einrichtung kann eine Nachrichtenverbindung zwischen zwei Punkten, die in Sichtverbindung miteinander stehen, einfach und schnell hergestellt werden. Das Ziel muß dabei aber nicht feststehend sein.

Als besonders vorteilhaft hat es sich erwiesen, daß die Einrichtung für die Schuß- oder Gefechtssimulation benutzt werden kann. Dafür wird vorgesehen, daß ein mit mindestens einen Retroreflektor bestücktes Ziel mit einem ersten Strahlenbündel von einem ersten Projektor für inkohärentes Licht beleuchtet wird und aufgrund des reflektierten Lichts ein zweiter Projektor für Laserlicht beziehungsweise begrenzt monochromatisches Licht von Leuchtdioden auf den Retroreflektor gerichtet wird.

Ist auf diese Weise das Laserlicht oder Leuchtdiodenlicht des zweiten Projektors auf den Retroreflektor gerichtet, so können bekannte Verfahren für Schuß- und Gefechtssimulation angewendet werden. So können bei beweglichen Zielen die Daten der Veränderung des reflektierten Lichtes zur Ermittlung der Veränderung der Zielkoordinaten verwendet werden. Dies ist sowohl dann, wenn sich das Ziel, als auch wenn sich der Schießende bewegt, möglich. Diese Zielortbestimmung kann dabei einerseits über das Laserlicht oder Leuchtdiodenlicht des zweiten Projektors durchgeführt werden, aber auch in besonders vorteilhafter Weise mit Hilfe der Zielbeleuchtung des ersten Projektors. In diesem Falle kann nämlich für gewisse Simulationszwecke der zweite Projektor bewußt vom Retroreflektor, dem er automatisch folgt, weggerichtet werden.

Mit dem Laserstrahl oder Leuchtdiodenstrahl können dann in bekannter Weise Ballistikdaten der Waffen, Waffensysteme und der Munitionsart über die ermittelte Entfernung übertragen werden. Zu diesem Zweck wird der Laserstrahl oder Leuchtdiodenstrahl entsprechend kodiert, zum Beispiel auch mit der Nummer dem Schützen oder des Waffensystems. Auch andere Nachrichten und Daten können auf diese Weise von den Projektoren, die den Schußsimulator entsprechen, zum Ziel mit seinen Retroreflektoren und Sensoren übertragen werden.

Auch andere Schußsimulationsarten sind möglich, indem zum Beispiel der Winkelversatz zu einer gegebenen Visierlinie gemessen wird. Auch andere Auswertungen anstelle des Nachführens beziehungsweise zusätzlich zum Nachführen des zweiten Projektors und auch möglicherweise des ersten Projektors sind möglich. Dabei kann durch entsprechende Auswertung eine Steuerung, Regelung und/oder Vermessung durchgeführt werden. Die Auswertung kann sich auch auf Maßnahmen zur Bestimmung der Richtigkeit eines durch Munitionsart und Entfernung vorgegebenen Aufsatzwinkels beziehen, der auf seine Richtigkeit mit Bezug auf die Ziellinie und deren Abweichung geprüft wird. Auch Maßnahmen, die mit der Geschwindigkeit des Zieles zusammenhängen (Vorhaltewinkel) können gesteuert oder überprüft werden.

Eine vorteilhafte Ausführungsform wird im Folgenden schematisch anhand der beigefügten Skizze beschrieben.

In der Figur ist eine Lichtquelle (1) für inkohärentes Licht gezeigt, die mit einer in der Figur nicht dargestellten Energieversorgung verbunden ist. Das Licht der inkohärenten Lichtquelle (1) wird mit Hilfe eines Projektors (2) zu einem Lichtbündel (3) mit einem Öffnungswinkel von einigen Grad aufgeweitet und auf ein Ziel (4) gerichtet. Dieses Ziel weist einen Retroreflektor (5) auf, von dem das Licht in sich selbst zurückreflektiert wird. Zur Verdeutlichung ist dabei den reflektierten Lichtstrahl (6) in der Figur eine etwas andere Richtung als derjenigen des einfallenden Lichtbündels (3) gegeben. In Wirklichkeit würde der Lichtstrahl (6) genau zurückreflektiert werden und könnte dann in die neben dem Projektor (2) angeordnete Empfangseinrichtung nur deshalb einfallen, weil auch sehr gute Retroreflektoren das Licht immer über einen wenn auch sehr kleinen Winkelbereich um den theoretischen Wert herum reflektieren.

Der reflektierte Lichtstrahl (6) fällt in das Objektiv (7) einer Fernsehkamera (8); das entsprechende Bild wird mit einer Einrichtung (9) ausgewertet, die dazu dient, einen Laser (10) mit einem Projektionsobjektiv (11) auf den Retroreflektor (5) zu richten.

Bei der gezeigten Ausführungsform ist zusätzlich noch ein Empfänger (12) für das reflektierte Laserlicht vorgesehen, wobei das reflektierte Laserlicht mit der strichpunktierten Linie (13) dargestellt ist, die wiederum zur Verdeutlichung nicht des idealen Verhalten eines Retroreflektors entspricht, bei dem einfallender und reflektierter Lichtstrahl zusammenfallen würden. Durch Laufzeitmessungen eines vom Laser (10) ausgestrahlten Pulses bis zum Empfang beim Sensor (12) kann alt einer Schaltung (14) die Entfernung zwischen dem Laserlichtprojektor (10) und dem Retroreflektor (5) bestimmt werden.

In der Nähe des Retroreflektors (5) kann noch ein Sensor beziehungsweise Detektor (15) für Laserlicht vorgesehen werden. Wird das Licht des Lasers (10) mit einer Schaltung (16) moduliert oder anders kodiert, so wird diese Kodierung des vom Detektor (15) aufgenommenen Lichtes in einer Schaltung (17) dekodiert, so daß hier die übertragene Information zurückgewonnen werden kann.

Bei der gezeigten Ausführungform wird der Laser (10) je nach Ort des Retroreflektors (5) mit Hilfe der Einrichtung (9) auf den Retroreflektor (5) ausgerichtet. Selbstverständlich könnte auch die Lichtquelle (1) und der Projektor (2) für das inkohärente Licht mittig auf den Retroreflektor (5) gerichtet werden.

**Patentansprüche**

1. Optoelektronische Einrichtung mit einem ersten Projektor (1, 2), der Licht in Form eines Strahlenbündels (3) mit einem ersten Raumöffnungswinkel ausstrahlt, mit einem oder mehreren Retroreflektoren (5) an einem vom Projektor entfernten Ort (4) und mit Einrichtungen (7, 8) zum Detektieren des zum Projektor (1, 2) zurück reflektierten Lichts und zum Bestimmen der Richtung des Orts (4), dadurch gekennzeichnet, daß der erste Projektor (1, 2) eine inkohärente Lichtquelle (1) aufweist, und daß ein zweiter Projektor (10, 11), der Laserlicht (13) bzw. begrenzt monochromatisches Licht von Leuchtdioden in einem engeren Strahlenbündel als das des ersten Projektors (1, 2) ausstrahlt, und Einrichtungen (9) zum Ausrichten des zweiten Projektors (10, 11) auf den/die Retroreflektoren (5) aufgrund der mit dem reflektierten Licht (6) des ersten Projektors (1, 2) bestimmten Richtung vorgesehen sind.

2. Einrichtung nach Anspruch 1, dadurch gekennzeichnet, daß das von ersten Projektor (1,2) ausgestrahlte Licht (3) einen Raumöffnungswinkel von 1 bis 5° hat.

3. Einrichtung nach Anspruch 1 oder 2, dadurch gekennzeichnet, daß die inkohärente Lichtquelle (1) des ersten Projektors (1,2) eine Gasentladungslampe ist.

4. Einrichtung nach Anspruch 3, dadurch gekennzeichnet, daß die inkohärente Lichtquelle (1) das ersten Projektors (1,2) eine kontinuierliche Lichtquelle ist.

5. Einrichtung nach einem der Ansprüche 1 bis 3, dadurch gekennzeichnet, daß die inkohärente Lichtquelle (1) des ersten Projektors (1,2) eine Blitzlichtröhre ist.

6. Einrichtung nach Anspruch 5, dadurch gekennzeichnet, daß die Blitzlichtröhre zum Abgaben von schnellen Blitzfolgen ausgebildet ist.

7. Einrichtung noch einem der Ansprüche 1 bis 5, dadurch gekennzeichnet, daß die Einrichtung zum Detektieren eine Fernsehkamera (7,8) zum Aufnehmen des reflektierten inkohärenten Lichts (6) aufweist.

8. Einrichtung nach Anspruch 7, dadurch gekennzeichnet, daß die Fernsehkamera (7,8) eine Matrix-CCD-Kamera ist.

9. Einrichtung nach einen der Ansprüche 1 bis 8, dadurch gekennzeichnet, daß am Ort (4) des/der Retroreflektoren (5) mindestens ein Detektor (15) für das Licht (13) des zweiten Projektors (10,11) vorgesehen ist.

10. Einrichtung nach Anspruch 9, dadurch gekennzeichnet, daß Einrichtungen (16) zum Modulieren des Lichts des zweiten Projektors (10,11) vorgesehen sind.

11. Einrichtung nach einem der Ansprüche 1 bis 10, dadurch gekennzeichnet, daß sie einen Laufzeitentfernungsmesser (14) für das Licht (13) des zweiten Projektors (10,11) zur Bestimmung des Abstands zwischen diesem Projektor (10,11) und dem/den Retroreflektoren (5) aufweist.

12. Verfahren zur Schuß- oder Gefechtssimulation unter Verwendung einer Einrichtung nach einem der Ansprüche 1 bis 11, dadurch gekennzeichnet, daß ein mit mindestens einem Retroreflektor bestücktes Ziel mit einem ersten Strahlenbündel von einem ersten Projektor für inkohärentes Licht beleuchtet wird und aufgrund des reflektierten Lichts ein zweiter Projektor für Laserlicht bzw. begrenzt mochromatisches Licht von Leuchtdioden auf den Retroreflektor gerichtet wird.

**Claims**

1. An optoelectronic apparatus with a first projector (1, 2) which emits light in the form of a beam (3) with a first beam angle, having one or more retroreflectors (5) at a location (4) spaced apart from the projector and having means (7, 8) for detecting the light reflected back towards the projector (1, 2) and for determining the direction of the location (4), characterised in that the first projector (1, 2) has an incoherent light source (1), and in that a second projector (10, 11) is provided, which emits laser light (13), or essentially monochromatic light, from light-emitting diodes in a narrower beam than that of the first projector (1, 2), and means (9) are provided for aligning the second projector (10, 11) with the retroreflector or retroreflectors (5) on the basis of the direction determined with the reflected light (6) of the first projector (1, 2).

2. An apparatus according to Claim 1, characterised in that the light (3) emitted from the first projector (1, 2) has a beam angle of from 1 to 5°.

3. An apparatus according to Claim 1 or 2, characterised in that the incoherent light source (1) of the first projector (1, 2) is a gas-discharge lamp.

4. An apparatus according to Claim 3, characterised in that the incoherent light source (1) of the first projector (1, 2) is a continuous light source.

5. An apparatus according to any one of Claims 1 to 3, characterised in that the incoherent light source (1) of the first projector (1, 2) is a flash-light tube.

6. An apparatus according to Claim 5, characterised in that the flash-light tube is designed to emit rapid flash sequences.

7. An apparatus according to any one of Claims 1 to 5, characterised in that detecting means comprises a television camera (7, 8) for recording the reflected incoherent light (6).

8. An apparatus according to Claim 7, characterised in that the television camera (7, 8) is a matrix CCD camera.

9. An apparatus according to any one of Claims 1 to 8, characterised in that at least one detector (15) for the light (13) of the second projector (10, 11) is provided at the location (4) of the retroreflector or retroreflectors (5).

10. An apparatus according to Claim 9, characterised in that means (16) are provided for modulating the light of the second projector (10, 11).

11. An apparatus according to any one of Claims 1 to 10, characterised in that it has a transit time telemeter (14) for the light (13) of the second projector (10, 11) for determining the distance between this projector (10, 11) and the retroreflector or retroreflectors (5).

12. A method of shooting or battle simulation using an apparatus according to any one of Claims 1 to 11, characterised in that a target provided with at least one retroreflector is illuminated with a first beam from a first projector of incoherent light and on the basis of the reflected light a second projector of laser light, or monochromatic light of narrow wavelength, from light-emitting diodes is directed on to the retroreflectors.

**Revendications**

1. Dispositif opto-électronique, comprenant un premier projecteur (1, 2) qui émet de la lumière sous forme d'un faisceau de rayons (3) ayant un premier angle solide d'ouverture, un ou plusieurs rétroréflecteurs (5) en un point (4) éloigné du projecteur, et des dispositifs (7, 8) pour la détection de la lumière réfléchie en retour vers le projecteur (1, 2) et pour la détermination de la direction du point (4), caractérisé en ce que le premier projecteur (1, 2) comporte une source de lumière incohérente (1), et en ce qu'il est prévu un deuxième projecteur (10, 11), qui rayonne de la lumière laser (13) ou de la lumière en substance monochromatique de diodes électroluminescentes en un faisceau de rayons plus étroit que celui du premier projecteur (1, 2), et des dispositifs (9) pour orienter le deuxième projecteur (10, 11) vers le/les rétroréflecteurs (5) sur la base de la direction déterminée par la lumière (6) issue du premier projecteur (1, 2) et réfléchie.

2. Dispositif selon la revendication 1, caractérisé en ce que la lumière (3) rayonnée par le premier réflecteur (1, 2) a un angle solide d'ouverture de 1 à 5°.

3. Dispositif selon la revendication 1 ou 2, caractérisé en ce que la source de lumière incohérente (1) du premier projecteur (1, 2) est une lampe à décharge luminescente à gaz.

4. Dispositif selon la revendication 3, caractérisé en ce que la source de lumière incohérente (1) du premier projecteur (1, 2) est une source de lumière continue.

5. Dispositif selon l'une quelconque des revendications 1 à 3, caractérisé en ce que la source de lumière incohérente (1) du premier projecteur (1, 2) est un tube à éclair.

6. Dispositif selon la revendication 5, cractérisé en ce que le tube à éclair est réalisé de façon à produire des suites rapides d'éclairs.

7. Dispositif selon l'une quelconque des revendications 1 à 5, caractérisé en ce que le dispositif de détection comporte une caméra de télévision (7, 8) pour capter la lumière incohérente réfléchie (6).

8. Dispositif selon la revendication 7, caractérisé en ce que la caméra de télévision (7, 8) est une caméra à matrice CCD.

9. Dispositif selon l'une quelconque des revendications 1 à 8, caractérisé en ce qu'il est prévu, au point (4) du/des rétroréflecteurs (5), au moins un détecteur (15) pour la lumière (13) du deuxième projecteur (10, 11).

10. Dispositif selon la revendication 9, caractérisé en ce qu'il est prévu des dispositifs (16) pour la modulation de la lumière du deuxième projecteur (10, 11).

11. Dispositif selon l'une quelconque des revendications 1 à 10, caractérisé en ce qu'il comporte un télémètre à mesure du temps de transit (14) pour la lumière (13) du deuxième projecteur (10, 11), afin de déterminer la distance entre ce projecteur (10, 11) et le/les rétroréflecteurs (5).

12. Procédé de simulation de tir ou de combat, avec utilisation d'un dispositif selon l'une quelconque des revendications 1 à 11, caractérisé en ce qu'une cible, équipée d'au moins un rétroréflecteur, est illuminée par un premier faisceau de rayons provenant d'un premier projecteur de lumière incohérente, et, sur la base de la lumière réfléchie, un deuxième projecteur de lumière laser ou de lumière monochromatique limitée de diodes électroluminescentes, est orienté vers le rétroréflecteur.